# EUROPÄISCHE PATENTSCHRIFT

(11) **EP 1 457 539 B1**
(45) Veröffentlichungstag und Bekanntmachung des Hinweises auf die Patenterteilung: **19.09.2012**
(21) Anmeldenummer: 04005202.9
(22) Anmeldetag: 04.03.2004
(51) Int. Cl.: C09D 167/06, C08F 283/01, C08L 67/06, C08G 63/688

(54) **Wasserverdünnbare Polyesterharze**
water-thinnable polyester resins
résine de polyester diluable à l'eau

(30) Priorität: 12.03.2003 AT 3922003
(43) Veröffentlichungstag der Anmeldung: 15.09.2004
(73) Patentinhaber: Cytec Austria GmbH, 8402 Werndorf (AT)
(72) Erfinder: Reidlinger, Gerhard, Dr., 8010 Graz (AT); Billiani, Johann, Dr., 8042 Graz (AT); Jedlicka, Rudolf, Dr., 2700 Wiener Neustadt (AT); Zrin, Ewald, 8055 Graz (AT); Burkl, Julius, 8053 Graz (AT); Scherz, Johannes, 8142 Wundschuh (AT)
(74) Vertreter: Deckers, Hellmuth Alexander

(56) Entgegenhaltungen:
- EP-A- 0 558 788
- WO-A-95/05413
- WO-A-99/07759
- US-A- 4 119 680
- US-A- 4 946 932
- US-A- 5 907 003

## Beschreibung

Die Erfindung betrifft wasserverdünnbare Polyesterharze, ein Verfahren zu ihrer Herstellung, und ihre An wendung.

Bindemittel für Lacke können in wasserverdünnbarer Form bereitgestellt werden, indem die disperse Phase von Bindemitteltröpfchen in einer kontinuierlichen Phase von Wasser hinreichend stabilisiert wird. Dies kann erreicht werden durch Zusatz eines Emulgators (externe Emulgierung, fremdemulgierte Harze), oder indem das Bindemittel chemisch so modifiziert wird, daß es ionische oder andere hydrophile Gruppen in ausreichender Menge enthält (Interne Emulgierung, selbstemulgierende Harze).

Ein bekannter Weg zu wasserverdünnbaren Bindemitteln auf Basis von Polyesterharzen ist die Kondensation von Polyolen, bevorzugt Diolen, mit mehrbasigen, insbesondere zweibasigen, Säuren, wobei ein definierter Überschul von Säuregruppen im Polyester verbleibt. Das entstandene Polyesterharz kann nach Neutralisation zumindest eines Teils der Säuregruppen in Wasser zu stabilen Dispersionen emulgiert werden. Die mehrbasigen Säuren können insbesondere dreibasige Säuren mit Säuregruppen unterschiedlicher Reaktivität sein, wie zum Beispiel Citronensäure oder Sulfoisophthalsäure. Polyesterharze, die Sulfoisophthalsäure als Baustein enthalten, sind beispielsweise bekannt aus der EP-B 0 649 439.
Aus dem Dockument WO 95/05413 sind acryl-modifizierte Polyester bekannt, die durch Additions copolymerisation von äthylenisch ungesättigten Vinylmonomeren und einem Polyester hrgestellt werden. Der Polyester wird durch Polykondensation von Dicarbonsäuren, glykolen, äthylenisch ungessättigten Monomeren und einem Sulfomonomer hergestellt. In den Beispielen werden Schicht dicken von darans hergestellten lacken von 25,4 µm bis 38,1 µm (1.0 mil bis 1.5 mil) genannt.

Zur Vernetzung von Bindemitteln, die derartige Polyesterharze enthalten, werden Vernetzungsmittel eingesetzt, die mit Hydroxylgruppen der Bindemittel reagieren. Geeignete Vernetzungsmittel sind mehrfunktionelle Isocyanate, die in unblockierter Form bereits bei Raumtemperatur reaktiv sind, oder in blockierter Form, die erst bei erhöhter Temperatur über 80 °C, bevorzugt über 100 °C reaktiv sind, oder verätherte oder unverätherte Aminoplastharze. Genügend hochmolékulare Polyester sind auch physikalisch trocknend, d. h. nach Verdampfen des Dispergiermittels koaleszieren die Bindemitteltröpfchen und bilden einen Film.

Aus der EP-B 0 649 439 sind wäßrige Dispersionen von linearen Polyestern und Vinylharzen bekannt, die Massenanteile von 5 bis 40 % des Polyesters und 95 bis 60 % eines Vinylpolymeren, das einen Massenanteil von mindestens 20 % an wiederholenden Einheiten abgeleitet von Styrol oder einem Styrolderivat enthält. Diese Disper sionen sind in Hinsicht auf die folgenden Anwendungseigenschaften noch verbesserungsfähig: eine raschere (physikalische) Trocknung insbesondere bei hoch pigmentierten Lacken (Fassadenlacke, Straßenmarkierungsfarben) ist wünschenswert; die Vernetzung mit Aminoplastharzen (Melaminharzen) erfordert relativ hohe Temperaturen; in Klarlacken kommt es zur Bildung von Kochern bereits in niedrigen Schichtstärken und auch zur Bildung von Runzeln im getrockneten Lackfilm; die Beständigkeit gegen Lösungsmittel und wäßrige Lösungen ist verbesserungsbedürftig.

Überraschenderweise wurde nun gefunden, daß sich wäßrige Dispersionen von Polyesterharzen mit beson ders hohem Festkôrper-Massenanteil herstellen lassen, wenn Sulfolsophthalsäure oder andere in einen Polyester einkondensierbare Bausteine, insbesondere Dicarbonsäuren, die zusätzlich eine Sulfonsäuregruppe enthalten, in Polyesterharze eingebaut werden, die zusätzlich Bausteine mit polymerisierbaren Doppelbindungen enthalten. Weiter wurde gefunden, daß derartige Polyesterharze mit olefinisch ungesättigten Monomeren gepfropft werden können zu wasserverdünnbaren Hybridsystemen mit besonders hohem Festkörper-Massenanteil. Diese Polyesterharze und die aus ihnen gewonnenen Hybridsysteme zeigen in den oben angeführten Eigenschaften erhebliche Verbesserungen.

Die Erfindung betrifft daher wasserverdünnbare Polyesterharze **ABCD** gemäß Anspruch 1.

Weiter betrifft die Erfindung wasserverdünnbare modifizierte Polyesterharze **ABCDE** gemäβ Anspruch 2.

Die Polyesterharze **ABCD** sind herstellbar durch Polykondensation von hydroxyfunktionellen Verbindungen **A** mit im Mittel mindestens 2 Hydroxylgruppen pro Molekül, Carbonsäuren **B** mit im Mittel mindestens zwei Säuregruppen pro Molekül, einem Massenanteil von 0,5 bis 20 %, bevorzugt 1 bis 15 %, und insbesondere 1,5 bis 10 % einer Verbindung **D,** die neben mindestens einer unter Kondensationsbedingungen in einen Polyester einzubauenden funktionellen Gruppe ausgewählt aus Hydroxylgruppen, Carboxylgruppen und Aminogruppen zusätzlich mindestens eine Sulfonsäuregruppe im Molekül enthält, und ungesättigten Verbindungen **C** mit mindestens einer, bevorzugt zwei unter Kondensationsbedingungen mit hydroxyfunktioneilen Verbindungen reaktiven Gruppen ausgewählt aus , Carbonsäuregruppen, , insbesondere Mono-, Dioder Polycarbonsäuren **C1** mit 10 bis 30 Kohlenstoffatomen im Fall von ungesättigten Monocarbonsäuren, oder 4 bzw. 7 bis 30 Kohlenstoffatomen im Fall von ungesättigten Dicarbonsäuren bzw. Polycarbonsäuren.

Die hydroxyfunktionellen Verbindungen **A** sind Äthylenglykol, 1,2- und 1,3-Propylenglykol, 1,4-Butandiol, Neopentylglykol, 1,6-Hexandiol, 1,2- und 1,4-Dihydroxycyclohexan, 3,4-Diäthyl-3,4-hexandiol und 1,4-Bis(hydroxymethyl)cyclohexan, die jeweils einzeln oder im Gemisch eingesetzt werden. Besonders bevorzugt werden Glykol, Neopentylglykol und 1,2-Propylenglykol.

Die Säuren **B** sind bevorzugt zweibasige Carbonsäuren wie Adipinsäure, Bernsteinsäure, Sebacinsäure, Cyclohexandicarbonsäure, Phthalsäure, Isophthalsäure und Terephthalsäure, Sulfonyldibenzoesäure, Diphenylätherdicarbonsäure und die isomeren Naphthalindicarbonsäuren, sowie dimere Fettsäuren, die durch katalysierte Dimerisierung ungesättigter Fettsäuren (z.B. Tallöl-Fettsäure) als Gemisch aus acyclischen und cyclischen Dicarbonsäuren gewonnen werden. Es lassen sich auch drei- oder mehrbasige Säuren in einem Massenanteil von bis zu 10% einsetzen, dafür werden beispielsweise Trimellithsäure, Trimesinsäure, Cyclohexantricarbonsäure, Benzophenontetracarbonsäure und Pyromellithsäure bevorzugt. Besonders bevorzugt werden Adipinsäure und die isomeren Phthalsäuren, jeweils einzeln oder im Gemisch. Geeignete Sulfonsäuregruppen-haltige Verbindungen **D** sind Sulfoisophthalsäure sowie Sulfonylbernsteinsäure, 4-Amino-3-hydroxynaphthalinsulfonsäure, N,N-Bis (hydroxyäthyl)-2-aminoäthansulfonsäure, Naphthol-3,6-disulfonsäure, 4-Amino-5-hydroxynaphthalinsulfonsäure und 6,7-Dihydroxy-naphthalin-2-sulfonsäure.

Die ungesättigten Verbindungen **C** sind bevorzugt Fettsäuren **C1** wie Ölsäure, Linolsäure, Linolensäure, Ricinolsäure, Elaidinsäure, Arachidonsäure, Erucasäure und Eleostearinsäure oder deren Gemische, andere ungesättigte Säuren wie Maleinsäure, Fumarsäure, Acrylsäure, Methacrylsäure und Tetrahydrophthalsäure

Die Monomere **E**, die bevorzugt in Mischung von mindestens zwei verschiedenen Monomeren in Gegenwart der Polyesterharze **ABCD** in wäßriger Emulsion polymerisiert werden, sind ausgewählt aus ungesättigten Estern **E1,** Hydrox-ylgruppen-haltigen ungesättigten Estern **E2,** ungesättigten Säuren **E3,** sowie olefinisch ungesättigten Monomeren **E4,** die keine der genannten funktionellen Gruppen enthalten, und die ausgewählt sind aus der Gruppe der olefinisch ungesättigten Aromaten wie Styrol, Vinyltoluol, alpha-Methylstyrol; Vinylhalogeniden wie Vinylchlorid, Vinylidenchlorid; der ungesättigten Nitrile wie Acrylnitril, Methacrylnitril; Vinyläthem wie Mathylvhyläther; ungesättigten Amiden wie Acrylamid, Methacrylamid; und der ungesättigten Ketone wie Methylvinylketon und Diaceton(meth)acrylamid.

Werden ungesättigte Ketone als Monomere **E4** mitverwendet, so lassen sich aus den Harzen **ABCDE** auch selbstvemetzenden Bindemittel formulieren, indem zu einer diese enthaltenden wäßriger Dispersion Diamine oder bevorzugt Dihydrazine oder Dihydrazide zugesetzt werden, wobei diese als Vernetzer durch die Ausbildung von Schiff'schen Basen oder Hydrazonen reagieren. Besonders bevorzugt sind Dihydrazide von aliphatischen Dicarbonsäuren wie zum Beispiel Adipinsäuredihydrazid.

Werden als Monomere **E4** zumindest teilweise Diolefine eingesetzt, wie z. B. Divinylbenzol, so werden bereits während des Polymerisationsschritts Vernetzungen zwischen mindestens zwei der Polyestermoleküle gebildet. Je nach der Menge der eingesetzten Diolefine erhält man bei der Polymerisation vernetzte Mikrogele oder nur schwach vernetzte Systeme.

Die erfindungsgemäßen Polyesterharze lassen sich besonders zur Formulierung von Lacken für die Lackierung von Kunststoffen und anderen temperaturempfindlichen Substraten wie Papier, Karton und Textilien anwenden. Auch zur Formulierung von Straßenmarkierungsfarben sind sie geeignet. Neben den bereits oben erwähnten vorteilhaften Eigenschaften der raschen (physikalischen) Trocknung insbesondere bei hoch pigmentierten Lacken (Fassadenlacke, Straßenmarkierungsfarben), einer hohen Vernetzungsgeschwindigkeit bzw. erniedrigten Vernetzungstemperatur mit Aminoplastharzen (Melaminharzen), der Freiheit von Kochern in dickeren Schichten (Klarlacken) bis ca. 100 µm, der Freiheit von Runzeln im getrockneten Lackfilm und der verbesserten Beständigkeit gegen Lösungsmittel und wäßrige Lösungen ist noch die Unempfindlichkeit gegenüber Verfärbung beim Kontakt mit farbstoffhaltigen Pasten (beispielsweise Schuhcreme, sogenannter "yellow dye test", insbesondere in Fußbodenbeschichtungen) anzuführen.

Die Erfindung wird durch die nachfolgenden Beispiele erläutert, ohne sie in ihrem Umfang zu beschränken.

Die früher so bezeichnete "Grenzviskositätszahl", nach DIN 1342, Teil 2.4, "Staudinger-Index" ***J_{g}*** genannt, ist der Grenzwert der Staudinger-Funktion ***J***ᵥ bei abnehmender Konzentration und Schubspannung, wobei ***J***ᵥ die auf die Massenkonzentration β_{B} = ***m***_{B}/ ***V*** des gelösten Stoffes B (mit der Masse ***m***_{B} des Stoffes im Volumen ***V*** der Lösung) bezogene relative Viskositätsänderung ist, also ***J***ᵥ = *(*ηᵣ-1) / β_{B}. Dabei bedeutet ηᵣ - 1 die relative Viskositätsänderung, gemäß ηᵣ- 1 = (η- ηₛ) / ηₛ. Die relative Viskosität ηᵣ ist der Quotient aus der Viskosität η der untersuchten Lösung und der Viskosität ηₛ des reinen Lösungsmittels. (Die physikalische Bedeutung des Staudinger-Index ist die eines spezifischen hydrodynamischen Volumens des solvatisierten Polymerknäuels bei unendlicher Verdünnung und im Ruhezustand.) Die üblicherweise für ***J*** verwendete Einheit ist "cm³/g"; früher häufig "dl/g".

### Beispiele

### Polyesterharze

### Beispiel 1

208 g Neopentylglykol, 186 g Äthylenglykol, 22 g Sulfoisophthalsäure, 1 g Dibutylzinnoxid, 0,7 g Triphenylphosphit und 222 g Phthalsäureanhydrid wurden in einen Reaktor gefüllt und auf 180 °C geheizt. Die Temperatur wurde unter Rühren solange konstant gelassen, bis eine klare Schmelze entstanden war. Danach wurden 222 g Phthalsäureanhydrid und 49 g Maleinsäureanhydrid zugefügt, die Mischung wurde innerhalb von 2 Stunden auf 205 °C aufgeheizt. Durch Zugabe von 35 g Xylol wurde das Reaktionswasser azeotrop abdestilliert, das vom Wasser getrennte Xylol wurde im Kreis geführt. Es wurde solange bei dieser Temperatur unter Wasserabtrennung reagiert, bis die Säurezahl des Reaktionsgemischs auf weniger als 5 mg/g gefallen war (ca. 5 Stunden). Nach Zugabe von 75 g isophthalsäure wurde weiter unter Abtrennung des Reaktionswassers bis zu einem Staudinger-Index von ca. 14 cm³/g (gemessen in Chloroform als Lösungsmittel bei 23°C) verestert. Anschließend wurden 45 g Isononansäure zugegeben und bis zu einem Staudinger-Index von ca. 20 cm³/g weiter verestert. Dann wurde das Xylol durch Destillation unter vermindertem Druck entfernt. Die Reaktionsmischung wurde weiter bei 200 °C gehalten, bis ein Staudinger-index von ca. 24 cm³/g erreicht war. Danach wurde der Reaktor abgekühlt und der Inhalt mit einer Mischung von 20 g Methoxypropoxypropanol, 100 g Methoxypropanol und 100 g Butylglykol angelöst. Die erhaltene Lösung wurde in 700 g destilliertem Wasser emulgiert.

An der Dispersion wurden die folgenden Werte bestimmt:

| | |
|---|---|
| Festkörper-Massenanteil* | 50%, |
| pH-Wert | 3,1 |
| dynamische Viskosität + | 3046 mPa·s |
| Säurezahl | 15,7 mg/g |

| | |
|---|---|
| *gemessen als nichtflüchtiger Anteil bei Trocknung bei 120 °C während fünf Minuten + gemessen an einer 50 % Igen Lösung in Chloroform bei 10 s⁻¹ und 23°C | |

### Beispiel 2

208 g Neopentylglykol, 186 g Äthylenglykol, 22 g Sulfoisophthalsäure, 1 g Dibutylzinnoxid, 0,7 g Triphenylphosphit und 222 g Phthalsäureanhydrid wurden in einen Reaktor gefüllt und auf 180 °C geheizt. Die Temperatur wurde unter Rühren solange konstant gelassen, bis eine klare Schmelze entstanden war. Danach wurden 222 g Phthalsäureanhydrid und 49 g Maleinsäureanhydrid zugefügt, die Mischung wurde innerhalb von 2 Stunden auf 205 °C aufgeheizt. Durch Zugabe von 35 g Xylol wurde das Reaktionswasser azeotrop abdestilliert, das vom Wasser getrennte Xylol wurde im Kreis geführt. Es wurde solange bei dieser Temperatur unter Wasserabtrennung reagiert, bis die Säurezahl des Reaktionsgemischs auf weniger als 5 mg/g gefallen war (ca. 5 Stunden). Nach Zugabe von 75 g isophthalsäure wurde weiter unter Abtrennung des Reaktionswassers bis zu einem Staudinger-Index von ca. 20 cm³/g (gemessen in Chloroform als Lösungsmittel bei 23 °C) verestert. Dann wurde das Xylol durch Destillation unter vermindertem Druck entfernt. Die Reaktionsmischung wurde weiter bei 200 °C gehalten, bis ein Staudinger-Index von ca. 24 cm³/g erreicht war (ca. 10 Stunden). Anschließend wurde die Temperatur auf 180 °C gesenkt und es wurden 45 g ®Cardura E10 (Glycidylester der ®Versatic-10-Säure, Deutsche Shell Chemie GmbH) zugegeben. Die Temperatur wurde noch 90 Minuten gehalten, dann wurde der Reaktor abgekühlt und der Inhalt mit einer Mischung von 20 g Methoxypropoxypropanol, 100 g Methoxypropanol und 100 g Butylglykol angelöst. Die erhaltene Lösung wurde in 700 g destilliertem Wasser emulgiert.

An der Dispersion wurden die folgenden Werte bestimmt:

| | |
|---|---|
| Festkörper-Massenanteil | 50 %, |
| pH-Wert | 3,3 |
| dynamische Viskosität | 1417 mPa·s |
| Säurezahl | 5,5 mg/g |

### (Meßbedingungen wie oben)

Hybride von Polyesterharzen und Polymerisaten

### Beispiel 3

400 g der Dispersion des Polyesters aus Beispiel 1 wurden mit 85 g destilliertern Wasser verdünnt, darin wurde eine Mischung von 85 g Styrol und 15 g 2-Äthylhexylacrylet emulgiert. Nach Heizen auf 75 °C wurde unter gutem Rühren gleichmäßig innerhalb von einer Stunde 0,8 g tert.-Butylhydroperoxid, 1,2 g einer Lösung von Ascorbinsäure in Wasser (10 g Ascorbinsäure in 100 g der Lösung) und 4 g destilliertes Wasser zugegeben. Innerhalb von einer weiteren Stunde wurden 0,6 g tert.-Butylhydroperoxid,0,9 g der Lösung von Ascorbinsäure in Wasser und 4 g destilliertes Wasser zugefügt, nach einer weiteren Stunde wurde abermals 0,4 g tert.-Butythydroperoxid, 0,9 g der Ascorbinsäurelösung und 4 g destilliertes Wasser zugegeben. Die Mischung wurde unter Rühren eine weitere Stunde bei dieser Temperatur gehalten, danach wurde erneut 0,4 g tert.-Butylhydroperoxid und 1,6 g der Ascorbinsäurelösung zugegeben. Die Polymerisation wurde bis zum Erreichen des gewünschten Festkörper-Massenanteil fortgeführt. Danach wurde die Dispersion abgekühlt und und durch Plattenfilter mit einer Durchlaßgrenze von 5 µm filtriert.

An der Dispersion wurden die folgenden Werte bestimmt:

| | |
|---|---|
| Festkörper-Massenanteil | 50 %, |
| pH-Wert | 3,4 |
| dynamische Viskosität | 220 mPa·s |

### Beispiel 4

400 g der Dispersion des Polyesters aus Beispiel 2 wurden mit 85 g destilliertem Wasser verdünnt, darin wurde eine Mischung von 70 g Styrol und 30 g 2-Äthylhexylacrylat emulgiert. Nach Heizen auf 75 °C wurde unter gutem Rühren gleichmäßig innerhalb von einer Stunde 0,8 g tert.-Butylhydroperoxid, 1,2 g einer Lösung von Ascorbinsäure in Wasser (10 g Ascorbinsäure in 100 g der Lösung) und 2 g destilliertes Wasser zugegeben. Innerhalb von einer weiteren Stunde wurden 0,6 g tert.-Butylhydroperoxid,0,9 g der Lösung von Ascorbinsäure in Wasser und 2 g destilliertes Wasser zugefügt, nach einer weiteren Stunde wurde abermals 0,4 g tert.-Butylhydroperoxid, 0,6 g der Ascorbinsäurelösung und 2 g destilliertes Wasser zugegeben. Die Mischung wurde unter Rühren eine weitere Stunde bei dieser Temperatur gehalten, danach wurde erneut 0,4 g tert.-Butylhydroperoxid und 1,6 g der Ascorbinsäurelösung zugegeben. Die Polymerisation wurde bis zum Erreichen des gewünschten Festkörper-Massenanteil fortgeführt. Danach wurde die Dispersion abgekühlt und und durch Platten filter mit einer Durchlaßgrenze von 5 µm filtriert.

An der Dispersion wurden die folgenden Werte bestimmt:

| | |
|---|---|
| Festkörper-Messenanteil | 50 %, |
| pH-Wert | 3,2 |
| dynamische Viskosität | 195 mPa·s |

## Patentansprüche

1. Wasserverdünnbare Polyesterharze **ABCD** mit einem Massenanteil von 1 % bis 10 % an Einheiten, die sich von ungesättigten einkondensierten Bausteinen ableiten, einem Gehalt an olefinischen Doppelbindungen von 10 mmol/kg bis 2000 mmol/kg und einem Gehalt an Sulfonsäuregruppen von 20 mmol/kg bis 200 mmol/kg, herstellbar durch Polykondensation von hydroxyfunktionellen Verbindungen **A** mit im Mittel mindestens 2 Hydroxylgruppen pro Molekül und 2 bis 20 Kohlenstoffatomen, ausgewählt aus Äthylenglykol, 1,2- und 1,3-Propylenglykol, 1,4-Butandiol, Neopentylglykol, 1,6-Hexandiol, 1,2- und 1,4-Dihydroxycyclohexan, 3,4-Diäthyl-3,4-hexandiol und 1,4-Bis(hydroxymethyl)cyclohexan, die jeweils einzeln oder im Gemisch eingesetzt werden, von Carbonsäuren **B** mit im Mittel mindestens zwei Säuregruppen pro Molekül und 2 bis 40 Kohlenstoffatomen, von olefinisch ungesättigten Verbindungen. **C** mit mindestens einer unter Kondensationsbedingungen mit hydroxyfunktionellen oder säurefunktionellen Verbindungen reaktiven Gruppe ausgewählt aus Hydroxylgruppen, und Carbonsäuregruppen, und mindestens einer polymerisierbaren olefinischen Doppelbindung, und von einer Verbindung **D**, ausgewählt aus Sulfoisophthalsäure, Sulfonylbernsteinsäure, 4-Amino-3-hydroxynaphthalinsulfonsäure, N,N-Bis(hydroxyäthyl)-2-aminoäthansulfonsäure, Naphthol-3,6-disulfonsäure, 4-Amino-5-hydroxynaphthalinsulfonsäure und 6,7-Dihydroxy-naphthalin-2-sulfonsäure.

2. Wasserverdünnbare modifizierte Polyesterharze **ABCDE,** erhältlich durch Polymerisation von olefinisch ungesättigten Monomeren **E** in Gegenwart des Polyesters **ABCD** von Anspruch 1 mit einem Massenanteil von erzeugten Vinylpolymer von 20 % bis 80 % in dem modifizierten Polyester, und einem Gehalt an Sulfonsäuregruppen von 4 mmol/kg bis 240 mmol/kg.

3. Verfahren zur Herstellung von wasserverdünnbaren modifizierten Polyesterharzen **ABCDE** nach Anspruch 2, **dadurch gekennzeichnet, daß** olefinisch ungesättigte Monomere **E** in Gegenwart von Polyesterharzen **ABCD** nach Anspruch 1 polymerisiert werden.

4. Beschichtungsmittel enthaltend ein Polyesterharz nach Anspruch 1 oder 2.

5. Ein-Komponenten-Beschichtungsmittel enthaltend ein Polyesterharz nach Anspruch 1 oder 2 und ein Aminoplastharz.

## Claims

1. A water-dilutable polyester resin **ABCD** having a mass fraction of from 1 % to 10 % of units derived from unsaturated cocondensed building blocks, an olefinic double bond content of from 10 mmol/kg to 2 000 mmol/kg, and a sulphonic acid group content of from 20 mmol/kg to 200 mmol/kg, preparable by polycondensation of hydroxy-functional compounds **A** having on average at least two hydroxyl groups per molecule and from 2 to 20 carbon atoms, selected from ethylene glycol, 1,2- and 1,3-propylene glycol, 1,4-butanediol, neopentyl glycol, 1,6-hexanediol, 1,2-and 1,4-dihydroxycyclohexane, 3,4-diethyl-3,4-hexanediol, and 1,4-bis(hydroxymethyl)cyclohexane, each used individually or in a mixture, of carboxylic acids **B** having on average at least two acid groups per molecule and from 2 to 40 carbon atoms, of olefinically unsaturated compounds **C** containing at least one group which is reactive under condensation conditions with hydroxy-functional or acid-functional compounds and is selected from hydroxyl groups, and carboxylic acid groups, and at least one polymerisable olefinic double bond, and of a compound **D** selected from sulphoisophthalic acid, sulphonylsuccinic acid, 4-amino-3-hydroxynaphthalenesulphonic acid, N,N-bis-(hydroxyethyl)-2-aminoethanesulphonic acid, naphthol-3,6-disulphonic acid, 4-amino-5-hydroxynaphthalene-sulphonic acid, and 6,7-dihydroxynaphthalene-2-sulphonic acid.

2. A water-dilutable modified polyester resin **ABCDE** obtainable by polymerising olefinically unsaturated monomers **E** in the presence of the polyester **ABCD** of claim 1, having a mass fraction of generated vinyl polymer of from 20 % to 80 % in the modified polyester, and a sulphonic acid group content of from 4 mmol/kg to 240 mmol/kg.

3. A process for preparing a water-dilutable modified polyester resin **ABCDE** as claimed in claim 2, which comprises polymerising olefinically unsaturated monomers **E** in the presence of a polyester resin **ABCD** as claimed in claim 1.

4. A coating composition comprising a polyester resin as claimed in claim 1 or 2.

5. A one-pack coating composition comprising a polyester resin as claimed in claim 1 or 2 and an amino resin.

## Revendications

1. Résine de polyester ABCD diluable à l'eau, présentant une fraction massique de 1 % à 10 % d'unités qui proviennent d'éléments constitutifs condensés insaturés, une teneur en doubles liaisons oléfiniques de 10 mmol/kg à 2000 mmol/kg et une teneur en groupes acide sulfonique de 20 mmol/kg à 200 mmol/kg, pouvant être produite par polycondensation de composés A à fonctionnalité hydroxy comportant en moyenne au moins 2 groupes hydroxyle par molécule et 2 à 20 atomes de carbone, choisis parmi l'éthylène glycol, les 1,2- et 1,3-propylène glycols, le 1,4-butanediol, le néopentylglycol, le 1,6-hexanediol, les 1,2- et 1,4-dihydroxy-cyclohexane, le 3,4-diéthyl-3,4-hexanediol et le 1,4-bis(hydroxyméthyl)cyclohexane qui sont utilisés respectivement individuellement ou en mélanges, d'acides carboxyliques B comportant en moyenne au moins deux groupes acides par molécule et 2 à 40 atomes de carbone, de composés oléfiniques insaturés C comportant au moins un groupe réactif dans des conditions de condensation avec des composés à fonctionnalité hydroxy ou des composés à fonctionnalité acide, choisis parmi des groupes hydroxyle et des groupes d'acide carboxylique et au moins une double liaison oléfinique polymérisable, et d'un composé D choisi parmi l'acide sulfo-isophthalique, l'acide sulfonylsuccinique, l'acide 4-amino-3-hydroxynaphthaline-sulfonique, l'acide N,N-bis(hydroxyéthyl)-2-amino-éthane-sulfonique, l'acide naphthol-3,6-disulfonique, l'acide 4-amino-5-dihydroxy-naphthaline-hydroxynaphthaline-sulfonique et l'acide 6,7-dihydroxy-naphthaline-2-sulfonique.

2. Résine de polyester ABCDE modifiée, diluable à l'eau, pouvant être obtenue par polymérisation de monomères E éthyléniquement insaturés en présence de polyester ABCD selon la revendication 1, présentant une fraction massique de polymère vinylique produit de 20 % à 80 % dans le polyester modifié, et une teneur en groupes acide sulfonique de 4 mmol/kg à 240 mmol/kg.

3. Procédé de production de résines de polyester ABCDE modifiées diluables à l'eau, selon la revendication 2, **caractérisé en ce que** les monomères oléfiniquement insaturés E sont polymérisés en présence de résines de polyester ABCD selon la revendication 1.

4. Agent de revêtement contenant une résine de polyester selon la revendication 1 ou 2.

5. Agent de revêtement à un composant contenant une résine de polyester selon la revendication 1 ou 2, et une résine aminoplaste.
